(19) Europäisches Patentamt
European Patent Office
Office européen des brevets

(11) Numéro de publication: **0 384 859 A1**

(12) **DEMANDE DE BREVET EUROPEEN**

(21) Numéro de dépôt: **90420084.7**

(51) Int. Cl.[5]: **C08G 69/28, C08G 69/26**

(22) Date de dépôt: **19.02.90**

(30) Priorité: **21.02.89 FR 8902467**

(43) Date de publication de la demande: **29.08.90 Bulletin 90/35**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Lahary, Pierre-Yves**
**331, rue Garibaldi**
**F-69007 Lyon(FR)**
Inventeur: **Roy, Serge**
**229, rue des Condamines**
**F-69390 Charly(FR)**

(74) Mandataire: **Trolliet, Maurice et al**
**RHONE-POULENC CHIMIE Service Brevets**
**Chimie Centre de Recherches des Carrières**
**B.P. 62**
**F-69192 Saint-Fons Cédex(FR)**

(54) **Procédé de préparation de polyamides semi-aromatiques comprenant des restes d'acide(s) dicarboxylique(s) aromatique(s) et d'alkylpentamethylenediamine.**

(57) L'invention concerne un procédé de préparation de (co)polyamides semi-aromatiques amorphes ou semi-cristallins à partir d'un réactif acide comprenant au moins un acide dicarboxylique aromatique ayant de 8 à 18 atomes de carbone, d'un réactif aminé comprenant majoritairement une alkylpentaméthylenèdiamine et éventuellement d'un catalyseur.

Conformément à ce procédé, on polycondense les réactifs en opérant dans un système clos de type autoclave selon un protocole comprenant les étapes suivantes : une étape 1 de distillation de l'eau présente dans la masse réactionnelle sous pression autogène constante, puis une étape 2 de décompression jusqu'à pression atmosphérique et une étape 3 de finition, en veillant à ce que d'une part de l'eau soit ajoutée au départ dans la masse réactionnelle et d'autre part la distillation de l'étape 1 soit conduite dans des conditions particulières de température (température de début de distillation T1 comprise entre 160 °C et 190 °C) et de pression autogène (comprise entre 0,5 et 1,2 MPa).

Avec un pareil procédé, les pertes en réactif aminé (par enchaînement dans les distillats et par cyclisation) sont significativement réduites.

EP 0 384 859 A1

# PROCEDE DE PREPARATION DE POLYAMIDES SEMI-AROMATIQUES COMPRENANT DES RESTES D'ACIDE(S) DICARBOXYLIQUE(S) AROMATIQUE(S) ET D'ALKYLPENTAMETHYLENEDIAMINE

La présente invention se rapporte à un nouveau procédé de préparation de (co)polyamides semi-aromatiques amorphes ou semi-cristallins à partir d'un réactif acide comprenant au moins un acide dicarboxylique aromatique ayant de 8 à 18 atomes de carbone et d'un réactif aminé comprenant majoritairement une alkylpentaméthylenèdiamine.

On connait depuis longtemps des polyamides dérivant de diamines aliphatiques et de diacides carboxyliques aromatiques. Selon leur composition, ces polyamides sont : soit des polymères semi-cristallins ayant une température de transition vitreuse Tg élevée, généralement supérieure à 120° C, et une température de fusion Tf bien supérieure à 300° C qui n'est pas compatible avec une mise en oeuvre aisée par voie fondue ; soi t des polymères amorphes qui combinent une Tg présentant souvent des valeurs moyennes de 100 à 120° C avec une température de mise en oeuvre pas trop élevée de l'ordre de 200 à 290° C. On utilise avantageusement les polyamides semi-cristallin lorsque l'on souhaite par exemple fabriquer des articles conformés qui présentent, en raison de la valeur élevée de la Tg du polymère utilisé, une excellente stabilité dimensionnelle et une excellente conservation des propriétés mécaniques aux températures élevées. On utilise avantageusement les polyamides amorphes dans les domaines qui exigent par exemple une excellente transparence pour les articles fabriqués.

Des polyamides semi-cristallins particulièrement intéressants sont ceux obtenus à partir de méthyl-2 pentaméthylènediamine-1,5 et d'acide téréphtalique (cf. JP-A-69/019.551) en raison de la possibilité d'obtenir une Tg de l'ordre de 142° C tout en ayant une Tf qui demeure inférieure à 290° C, ce qui autorise la mise en oeuvre du polymère selon les méthodes habituelles utilisées pour la transformation du polyamide 6,6. Des polyamides amorphes particulièrement intéressants sont ceux obtenus aussi à partir de méthyl-2 pentaméthylènediamine mais qui est mise à réagir cette fois avec un mélange d'acide téréphtalique et d'acide isophtalique (15 à 30 % en mole dans le mélange des diacides) (cf. FR-A-2.325.673) en raison de la possibilité d'obtenir une valeur de Tg, élevée pour un polymère amorphe, pouvant atteindre là aussi 142° C.

Un mode opératoire commode pour préparer ces polyamides semi-aromatiques particulièrement intéressants consiste dans le procédé de polycondensation classique servant à préparer le nylon 6,6, réalisé en phase liquide ou en masse fondue. Selon ce procédé, on réalise la polycondensation à partir de compositions de départ soit renfermant des quantités stoechiométriques ou voisines de la stoechiométrie de diamine et de diacide, soit renfermant leur sel, en opérant dans un système clos de type autoclave éventuellement en présence d'eau et en enchaînant les étapes suivantes :

- étape 1 : dans laquelle, l'autoclave étant fermé, on augmente progressivement la température de la composition de départ jusqu'à une valeur se situant dans l'intervalle allant de 200° C à 240° C ; puis, sous une pression constante égale à la pression autogène de vapeur d'eau obtenue qui se situe par exemple dans l'intervalle allant de 1,5 à 2,5 MPa quand la composition de départ contient de l'eau, on élimine par distillation régulière l'eau présente dans la masse réactionnelle en élevant progressivement dans le même temps la température de la masse à une valeur se situant dans l'intervalle allant de 245° à 280° C ;
- étape 2 : dans laquelle on abaisse progressivement la pression de la valeur de la pression autogène jusqu'à la valeur de la pression atmosphérique et éventuellement on éleve dans le même temps la température de la masse à une valeur supérieure d'une dizaine à plusieurs dizaines de degrés celsius à la température atteinte avant décompression, en continuant à assurer pendant la durée de cette décompression une distillation régulière d'eau ;
- étape 3 : dans laquelle on achève la polycondensation en agitant la masse réactionnelle un certain temps, en opérant sous la pression atmosphérique et éventuellement (ou) sous une pression inférieure avec une température de masse égale ou supérieure à la température obtenue en fin d'étape 2, jusqu'au moment où le polyamide a atteint les caractéristiques moléculaires et de viscosité souhaitées.

La mise en oeuvre d'un pareil procédé classique de polycondensation n'est cependant pas exempte d'inconvénients quand le réactif aminé de départ est constitué par une alkylpentaméthylènediamine comme la méthyl-2 pentaméthylènediamine-1,5 en raison du développement de réactions parasites concernant cette diamine. La méthyl-2 pentaméthylènediamine-1,5 est un composé qui se cyclise facilement ; cette cyclisation, quand elle concerne la diamine libre, donne naissance à la méthyl-3 pipéridine (produit appelé dans ce qui suit par l'expression : "amine cyclique libre") avec libération d'ammoniac $NH_3$ et, quand elle concerne la diamine engagée dans les réactions d'amidification par un seul de ses groupes fonctionnels, elle agit comme un mécanisme limiteur de chaînes en donnant naissance à des groupes de blocage de formule :

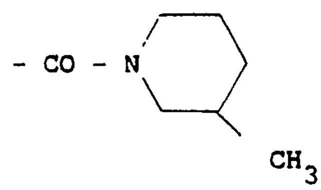

avec aussi libération d'ammoniac. L'amine cyclique libre formée est récupérée pendant les étapes 1 et 2 au moment de l'élimination de l'eau par distillation sous pression constante (étape 1) puis pendant la décompression (étape 2). Une autre réaction parasite consiste dans la perte par entraînement du réactif aminé (méthyl-2 pentaméthylènediamine) qui intervient essentiellement au cours des étapes 1 et 2 au moment de l'élimination de l'eau présente par distillation sous pression constante (étape 1) puis pendant la décompression (étape 2). Le résultat de ces réactions parasites se présente donc sous deux aspects néfastes :

- d'un côté, une perte élevée en basicité totale, qui est au moins égale à 4,5 %, impliquant d'une part une perte de stoechiométrie en cours de polycondensation entre les groupements amino primaire et les groupements carboxy qui réagissent en empêchant par voie de conséquence la possibilité d'augmenter aisément la masse moléculaire du polyamide en formation, et d'autre part une réelle difficulté pour reproduire industriellement le procédé mis en oeuvre. La perte en basicité totale dont on a parlé ci-avant est établie par rapport à la quantité totale de réactif aminé engagée et elle est exprimée par l'équation :

$$\frac{\text{basicité perdue}}{\text{basicité engagée}} \times 100 \text{ dans laquelle :}$$

. l'expression "basicité perdue" correspond à la somme : nombre d'équivalents $NH_2$ de réactif aminé perdu en cours de distillation + nombre d'équivalents NH d'amine cyclique libre + nombre d'équivalents $NH_2$ d'ammoniac. Cette basicité perdue est mesurée directement, à l'aide d'un dosage potentiométrique, sur les distillats c'est-à-dire sur la totalité de l'eau condensée pendant les phases de distillation sous pression autogène constante et pendant la décompression. Il est possible de mesurer le seul nombre d'équivalents NH d'amine cyclique libre, à l'aide toujours d'un dosage potentiométrique, en opérant sur les distillats, mais après les avoir traités de manière à différencier l'amine cyclique libre des autres basicité (réactif aminé et ammoniac) ;

. l'expression "basicité engagée" correspond au nombre d'équivalents $NH_2$ du réactif aminé engagé. L'expression "nombre d'équivalents" amino primaire ou secondaire d'un composé définit le nombre de groupements amino primaire ou secondaire contenus dans une mole dudit composé ; par exemple 1 mole de réactif aminé consistant dans la méthyl-2 pentaméthylènediamine contient 2 équivalents amino primaire $NH_2$ tandis qu'une mole d'amine cyclique consistant dans la méthyl-3 pipéridine contient un équivalent amino secondaire NH ;

- et d'un autre côté, l'existence dans le milieu de polycondensation d'un taux élevé de groupements terminaux de type amine cyclique qui jouent le rôle de limiteur de chaîne et peuvent limiter l'accès à de hautes masses moléculaires. Il convient de noter que ce second aspect néfaste du résultat est moins gênant que le premier concernant la perte en basicité totale.

En définitive, l'existence des difficultés particulières qui viennent d'être exposés, liées à l'emploi d'un réactif aminé, comme une alkylpentaméthylènediamine, pouvant être facilement entraîné par distillation et cyclisé par une réaction donnant naissance à des produits inutiles dans la polycondensation, fait que le procédé classique servant à préparer le nylon 6,6 devient impossible à mettre en oeuvre.

Poursuivant des travaux dans ce domaine de la technique, la Demanderesse a maintenant trouvé, et c'est ce qui constitue l'objet de la présente invention, un procédé modifié par rapport au procédé classique type nylon 6,6 grâce auquel il est possible de préparer des polyamides semi-aromatiques amorphes ou semi-cristallins à partir d'un réactif aminé comprenant majoritairement une alkylpentaméthylenèdiamine, en particulier la méthyl-2 pentaméthylènediamine-1,5, en réduisant le développement des réactions parasites dont on a parlé ci-avant de telle manière que, notamment, on obtient cette fois une perte en basicité totale qui est abaissée à des valeurs inférieures à 4 %.

Plus précisément, la présente invention concerne un procédé de préparation de (co)polyamides semi-aromatiques amorphes ou semi-cristallins selon lequel on polycondense des compositions de départ

comprenant soit un réactif acide comprenant au moins un acide dicarboxylique aromatique ayant 8 à 18 atomes de carbone et un réactif aminé comprenant majoritairement une alkylpentamétylenèdiamine, soit leur(s) sel(s), en opérant dans un système clos de type autoclave et en enchaînant les étapes suivantes :

- étape 1 : dans laquelle, l'autoclave étant fermé, on augmente progressivement la température de la composition de départ jusqu'à une certaine valeur T1 supérieure à 110° C puis, sous une pression constante P égale à la pression autogène de vapeur d'eau obtenue qui est supérieure à la pression atmosphérique, on élimine par distillation régulière l'eau présente dans la masse réactionnelle en élevant progressivement dans le même temps la température de la masse à une valeur T2 supérieure à la température T1 atteinte avant distillation ;
- étape 2 : dans laquelle on abaisse progressivement la pression de la valeur de la pression autogène jusqu'à la valeur de la pression atmosphérique et éventuellement on éleve dans le même temps la température de la masse à une valeur T3 supérieure d'une dizaine à plusieurs dizaines de degrés celsius à la température T2 atteinte avant décompression, en continuant à assurer pendant la durée de cette décompression une distillation régulière d'eau ;
- étape 3 : dans laquelle on achève la polycondensation en agitant la masse réactionnelle un certain temps, en opérant sous la pression atmosphérique et éventuellement (ou) sous une pression inférieure avec une température de masse égale ou supérieure à la température T2 ou T3 obtenue en fin d'étape 2, pendant une durée suffisante permettant d'obtenir un polyamide ayant les caractéristiques moléculaires et de viscosité souhaitées ; ledit procédé étant caractérisé par les points suivants :

. les compositions de départ d'une part contiennent en outre de manière obligatoire de l'eau en quantité suffisante pour permettre de conduire la distillation de l'étape 1 dans les conditions particulières de températures (T1 et T2) et de pression (P) indiquées dans le point qui suit, et d'autre part contiennent en outre mais de manière facultative un catalyseur ;

. dans l'étape 1, après avoir fermé l'autoclave, on augmente progressivement la température de la composition de départ jusqu'à une (valeur T1 se situant dans l'intervalle allant de 160° C à 190° C ; puis, sous une pression constante P égale à la pression autogène de vapeur d'eau obtenue qui se situe dans l'intervalle allant de 0,5 à 1,2 MPa, on élimine par distillation régulière l'eau présente dans la masse réactionnelle en élevant progressivement dans le même temps la température de la masse à une valeur T2 se situant dans l'intervalle allant de 210° C à 235° C.

Le procédé qui vient d'être décrit peut être appliqué à des compositions comprenant soit des quantités stoechiométriques d'un réactif acide et d'un réactif aminé apportant des nombres de groupements COOH et $NH_2$ équivalents, soit leur(s) sel(s) stoechiométrique(s).

Il peut être avantageux d'engager des quantités de réactif aminé qui sont supérieures à celles juste nécessaires pour avoir l'équivalence entre les groupements COOH et $NH_2$ dans les compositions de départ, de manière à introduire dans la masse réactionnelle un excès de diamine(s) permettant de compenser la perte de ce réactif qui intervient lors de l'opération de distillation sous pression autogène constante (étape 1), puis lors de l'opération de décompression (étape 2). Dans le cadre de ce mode opératoire avantageux, l'excès de réactif aminé, exprimé par le pourcentage molaire de réactif aminé en excès suivant la relation :

$$\frac{\text{nombre total de moles de réactif aminé - nombre de moles de réactif aminé nécessaire pour la stoechiométrie}}{\text{nombre de moles de réactif aminé nécessaire pour la stoechiométrie}} \times 100$$

se situe habituellement dans l'intervalle allant de 0,5 à 7 % et, de préférence, allant de 1 à 5 %.

Des compositions de départ préparées à partir :

- à titre de réactif acide : d'acide téréphtalique et/ou d'acide isophtalique,
- et à titre de réactif aminé : de méthyl-2 pentaméthylènediamine-1,5 prise seule ou en mélange avec au plus 15 % en mole d'éthyl-2 tétraméthylenèdiamine-1 ,4,

sont parfaitement appropriées pour mettre en oeuvre le procédé selon la présente invention. Pour fabriquer des polyamides semi-aromatiques amorphes, on utilise avantageusement un réactif acide consistant dans un mélange d'acide téréphtalique avec au moins 10 % en mole (dans le mélange des deux acides) d'acide isophtalique. Pour fabriquer des polyamides semi-aromatiques semi-cristallins, on utilise avantageusement dans ce cas un réactif consistant uniquement dans l'acide téréphtalique. On peut effectuer la synthèse de la méthyl-2 pentaméthylènediamine utilisée par hydrogénation du dinitrile de l'acide méthyl-2 glutarique selon les procédés connus. De même, la synthèse de l'éthyl-2 tétraméthylènediamine peut être effectuée par hydrogénation du dinitrile de l'acide éthyl-2 succinique.

On va examiner maintenant plus en détail comment est mis en oeuvre le procédé selon la présente invention.

Par l'expression "eau présente dans la masse réactionnelle" qui apparaît ci-avant dans l'étape 1 à propos de la distillation, on entend définir l'eau contenue dans les compositions de départ plus l'eau qui se forme éventuellement par réaction de polycondensation du réactif acide et du réactif aminé. La quantité d'eau contenue dans les compositions de départ n'est pas critique dès l'instant où elle permet de conduire la distillation de l'étape 1 dans les conditions particulières de températures (T1 et T2) et de pression autogène (P) indiquées ci-avant ; cette quantité d'eau peut être déterminée aisément par l'homme de métier à l'aide de ses connaissances ordinaires et d'essais simples.

Pour la réalisation de l'étape 1 du procédé selon l'invention, on peut engager des compositions de départ qui se présentent sous forme de mélanges : soit à base du réactif acide, du réactif aminé, d'eau et éventuellement de catalyseur, le réactif acide étant utilisé à l'état solide et le réactif aminé étant utilisé par exemple dans l'état où il se trouve naturellement ou sous forme de solution aqueuse ; soit à base du (ou des) sel(s) de diacide(s) et de diamine(s), d'eau et éventuellement de catalyseur, le (ou les) sel(s) étant utilisés par exemple à l'état solide, en dispersion aqueuse ou sous forme de solution aqueuse.

Selon une modalité préférée de réalisation de l'étape 1, on engage des compositions de départ qui se présentent sous forme d'une dispersion aqueuse ou d'une solution aqueuse de sel(s) dérivé(s) de diacide(s) et de diamine(s) contenant éventuellement en outre un catalyseur, dans laquelle la quantité d'eau utilisé est avantageusement égale à celle qui correspond à l'eau contenue dans les compositions de départ. Pour réaliser la stoechiométrie et éventuellement le dépassement voulu de la stoechiométrie par ajout de diamine(s) dans la fabrication du (ou des) sel(s), on opère par pesée précise des réactifs de titre parfaitement connu au moment de la mise en oeuvre ; il est préférable de contrôler ensuite cette stoechiométrie par mesure du pH de solutions échantillons obtenues par dilution du sel (ou des) sel(s) dans un solvant approprié comme par exemple de l'eau.

Lorsque le procédé selon la présente invention est appliqué aux compositions de départ parfaitement appropriées dont on a parlé ci-avant, c'est-à-dire celles préparées à partir d'un réactif acide à base d'acide téréphtalique et/ou d'acide isophtalique et d'un réactif aminé à base de méthyl-2 pentaméthylènediamine et éventuellement d'éthyl-2 tétraméthylènediamine, la dispersion aqueuse ou la solution aqueuse de sel(s) mise en oeuvre présente une teneur en eau dont la borne inférieure se situe dans l'intervalle allant de 25 à 31 % en poids, par rapport à l'ensemble sel(s) + eau, suivant la nature du réactif acide (concentration maximale en sel(s) allant de 69 à 75 % en poids). S'agissant de la borne supérieure de la teneur en eau, elle est généralement égale à 50 % en poids (concentration minimale en sel(s) de 50 %). Il est bien entendu, dans le cas où la dispersion aqueuse ou la solution aqueuse de sel(s) présente une teneur en eau qui doit être abaissée, notamment lorsqu'elle est supérieure à 50 % en poids, que l'on peut réaliser dans un premier temps, avant de commencer l'étape 1, une opération de concentration de la composition de départ, par exemple par évaporation de l'eau à pression atmosphérique ou sous une pression légèrement supérieure à la pression atmosphérique et dans des conditions de températures basses ne permettant absolument pas le développement de réactions d'amidification et/ou des réactions parasites dont on a parlé ci-avant.

S'agissant du catalyseur qui peut être utilisé, il consiste généralement soit en un composé ($\alpha$), soit en un composé ($\beta$), ($\alpha$) désignant un mono- ou polyacide oxygéné minéral ou un mono- ou polyacide oxygéné organique autre qu'un acide carboxylique, dont l'une au moins des fonctions acides possède une constante d'ionisation pka dans l'eau à 25° C égale ou inférieure à 4, ($\beta$) désignant un sel alcalin ou alcalino-terreux de cet acide.

Comme acides forts qui conviennent on peut citer par exemple :

- parmi les oxyacides minéraux, les acides sulfureux, sulfurique, hypophosphoreux, phosphoreux, orthophosphorique ou pyrophosphorique ;
- parmi les oxyacides organiques :

. les acides organosulfoniques de formule $R_1 - SO_3H$ (I) dans laquelle $R_1$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

. les acides organophosphoniques de forme $R_2$ - P(O) $(OH)_2$ (II) dans laquelle $R_2$ représente un radical alkyle, un radical phényle ou un radical phénylalkyle, chacun de ces radicaux ayant la définition donnée ci-avant pour $R_1$ ;

. les acides organophosphiniques de formule $R_3R_4$ - P(O)(OH) (III) dans laquelle $R_3$ et $R_4$, identiques ou

différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_1$ ;

. les acides organophosphoneux de forme $R_5H$ - P(O) (OH) (IV) dans laquelle $R_5$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_1$.

On préfère utiliser comme acide fort (α), les acides dérivés du phosphore et plus particulièrement les acides hypophosphoreux, phosphoreux, orthophosphorique, pyrophosphorique, méthylphosphonique, phénylphosphonique, benzylphosphonique, diméthylphophinique, diphénylphosphinique, méthylphénylphosphinique, dibenzylphosphinique, méthylphosponeux, phénylphosphoneux ou benzylphosphoneux.

Pour ce qui est du sel d'acide (β), on fait appel généralement à des sels de métaux alcalins ou de métaux alcalino-terreux dérivés des oxyacides minéraux ou organiques (α).

On préfère utiliser comme sel (β), ceux qui sont totalement solubles dans le mélange réactionnel. Parmi ces sels (β) préférés, conviennent bien les sels de sodium et de potassium issus des types particuliers d'oxyacides minéraux ou organiques (α) qui conviennent cités ci-avant. Les sels (β) qui conviennent tout particulièrement bien sont les sels de sodium et de potassium issus des acides préférés dérivés du phophore cités nommément ci-avant.

Les proportions d'acide fort (α) ou de sel (β), exprimées en pourcentage en poids par rapport au polyamide final, sont comprises généralement entre 0,01 et 1 % et de préférence entre 0,01 et 0,5 %.

A propos de la conduite de l'étape 1 du procédé selon la présente invention, il convient de faire noter que le chauffage progressif de la composition de départ jusqu'à la température T1 peut se faire sur une durée allant par exemple de 10 minutes à 2 heures. Quant à la distillation sous pression autogène constante P, elle s'effectue sur une période de temps allant par exemple de 30 minutes à 3 heures 30 minutes.

Dans la conduite de l'étape 1, on préfèrera opérer la distillation sous une pression autogène constante P se situant dans l'intervalle allant de 0,6 à 1 MPa en choisissant : une température T1 de début de distillation se situant dans l'intervalle allant de 170° C à 185° C et une température T2 juste avant décompression se situant dans l'intervalle allant de 215° C à 230° C.

Dans la conduite de l'étape 2, la décompression, qui peut progresser par paliers successifs, s'effectue sur une période allant par exemple de 20 minutes à 2 heures 30 minutes et on élève dans le même temps la température de la masse réactionnelle à une valeur T3 se situant par exemple dans l'intervalle allant de 250° C à 320° C.

Dans la conduite de l'étape 3, on termine la polycondensation en laissant réagir la masse réactionnelle à la température T3 ou à une température pouvant être supérieure, de quelques degrés à une dizaine de degrés, à T3 en opérant de préférence sous une pression réduite se situant dans l'intervalle allant de $1.10^2$ à $1000.10^2$ Pa pendant une période dè temps (comprenant la durée de mise sous pression réduite) allant par exemple de 10 minutes à 3 heures.

Le respect des conditions opératoires décrites ci-avant et, en particulier, le respect des conditions de températures (spécialement celles concernant T1) et de pression (P) qui président à la distillation sous pression constante de l'étape 1, est essentiel pour maintenir la perte en basicité totale à des valeurs inférieures à 4 %. On a constaté de manière inattendue que la perte en basicité remonte significativement pour dépasser le seuil des 4 % aussi bien : lorsque les conditions de température et de pression se situent en dessus des bornes maximales des intervalles indiqués, c'est-à-dire 190° C pour T1 et 1,2 MPa pour P, que lorsque ces conditions se situent en dessous des bornes minimales des intervalles indiqués, c'est-à-dire 160° C pour T1 et 0,5 MPa pour P.

Il va de soi que, dans le procédé selon l'invention, la composition des réactifs de départ peut aussi comprendre divers additifs couramment utilisés lors de la préparation des polyamides conventionnels. Ces additifs peuvent être en particulier des agents nucléants et des stabilisants de nature variée.

Le procédé selon l'invention permet d'obtenir des (co)polyamides semi-aromatiques ayant un indice de viscosité (mesuré dans le métacrésol à 25° C sur une solution contenant 0,5 g de polymère séché dans 100 $cm^3$ de solvant) qui peut être au moins égal à 90 ml/g et c'est en particulier le cas lorsque l'on opère suivant le mode avantageux utilisant un excès de réactif aminé au départ ; de pareils (co)polyamides, du fait du niveau élevé des caractéristiques de viscosité obtenu, sont par exemple aptes à conduire après moulage à des articles conformés doués de bonnes propriétés mécaniques. Les (co)polyamides conformes au procédé de l'invention sont remarquables par ailleurs en ce que d'une part leurs taux de groupements terminaux COOH et NH2 sont assez correctement équilibrés (la différence GT $NH_2$ - GT COOH, où GT $NH_2$ représente le taux de groupements terminaux $NH_2$ et GT COOH représente le taux de groupements

terminaux COOH, se situant quand elle est prise en valeur absolue dans l'intervalle allant par exemple de 0 à 80 méq/kg ; la détermination des taux de groupements terminaux est éffectuée selon les indications données ci-après) et d'autre part leur taux de groupements terminaux limiteurs de chaîne du type amine cyclique est faible et généralement inférieur à 40 milliéquivalents par kilogramme de polymère.

Le procédé selon l'invention qui vient d'être décrit est particulièrement bien adapté à une marche en discontinu. Cependant, on ne sortirait pas du cadre de la présente invention en opérant selon une marche en continu consistant à enchaîner l'étape 1 telle que définie ci-avant avec une étape de décompression et une étape de finition qui correspond globalement aux étapes 2 et 3 du procédé de l'invention avec toutefois certaines adaptations connues en soi permettant une bonne réalisation de la marche en continu.

Les exemples qui suivent illustrent de manière non limitative comment la présente invention peut être mise en pratique.

Dans ces exemples, un certain nombre de contrôles sont effectués. On indique ci-après les modes opératoires selon lesquels ils sont effectués :

- DETERMINATION DES TAUX DE GROUPEMENTS TERMINAUX COOH (GT COOH) et $NH_2$ (GT $NH_2$) SUR POLYMERE :

Cette détermination est réalisée par dosage potentiométrique d'une solution de polymère dans le mélange trifluoroéthanol/choroforme 70/30 en poids par l'acide trifluorométhanesulfonique 0,02H. La méthode permet de doser simultanément les groupements COOH et $NH_2$ par ajout d'une solution d'hydroxyde de tétrabutylammonium 0,05N dans le nitrobenzène. Les résultats sont exprimés en milliéquivalents gramme par kilogramme de polymère (méq/kg).

- DOSAGE DE LA METHYLPIPERIDINE DANS LE POLYMERE :

Le dosage de la méthyl-3 pipéridine (MPP) dans le polymère est réalisé par chromatographie en phase gazeuse. Le principe de la méthode est le suivant :
. le polymère (environ 250 mg) subit tout d'abord une hydrolyse chlorhydrique (15 heures à 170 °C) puis il est neutralisé avec de la soude jusqu'à pH légèrement basique,
. les amines sont alors extraites quantitativement par le choroforme (environ 50 $cm^3$ ) , et
. cet extrait chloroformique est enfin analysé par chromatographie en phase gazeuse et la méthyl-3 pipéridine est dosée par la méthode de l'étalon interne (étalon interne = nonane). Le nombre de groupements terminaux MPP (GT MPP) sur le polymère est exprimé là aussi en méq/kg.

- MESURE DE L'INDICE DE VISCOSITE (IV) SUR POLYMERE :

Cet indice est déterminé à 25 °C selon la norme internationale ISO 307, édition de 1977, sur une solution contenant 0,5 g de polymère (séché pendant 2 heures à 60 °C sous balayage d'argon) dans 100 $cm^3$ de métacrésol.

- DOSAGE DE LA BASICITE PERDUE DANS LES DISTILLATS :

La mesure de cette basicité est effectuée par un dosage potentiométrique simple par HC1 sur la totalité de l'eau condensée pendant les phases de distillation sous pression autogène constante (étape 1) et pendant la décompression (étape 2).

- DOSAGE DE LA METHYLPIPERIDINE DANS LES DISTILLATS :

Le taux de méthyl-3 pipéridine est obtenu par un dosage potentiométrique des distillats après réaction spécifique avec l'aldéhyde salicylique qui permet de différencier la méthylpipéridine des autres basicités (méthyl-2 pentaméthylènediamine et ammoniac).

EXEMPLE 1 :

Dans cet exemple on décrit la préparation d'un copolyamide amorphe à partir d'acide isophtalique (20 % en mole dans le mélange des diacides), d'acide téréphtalique (80 % en mole dans le mélange des diacides) et de méthyl-2 pentaméthylènediamine-1,5 avec une perte en basicité totale de 3,1 %.

1) Préparation du sel acides (isophtalique + téréphtalique) méthylpentaméthylènediamine en solution aqueuse :

On opère dans un réacteur en verre de 10 litres équipé :
- d'un système de chauffage,
- d'un agitateur de type ancre,
- d'un système permettant un balayage d'azote et le maintien d'une atmosphère exempte d'oxygène, et
- d'un système permettant de condenser les produits volatils.

On introduit à froid dans le réacteur maintenu sous léger balayage d'azote :
- 436,4 g d'acide isophtalique (2,6289 moles),
- 1745,5 g d'acide téréphtalique (10,5151 moles),
- 1524,7 g de méthyl-2 pentaméthylènediamine-1,5 (13,1440 moles),
- 2471,1 g d'eau distillée.

On élève la température de la masse à 60 ° C et on agite le mélange pendant 2 heures en maintenant le balayage d'azote. On ajuste ensuite le pH du sel à 7,48 ± 0,05 par ajouts successifs de petites quantités de méthylpentaméthylènediamine ou d'un mélange acide isophtalique/acide téréphtalique 20/80 en mole (pH mesuré à 20 ° C sur une solution aqueuse à 10 % en poids de sel). On obtient ainsi une solution aqueuse à 60 % en poids de sel stoechiométrique.

On ajoute alors 61 g (0,5258 mole) de méthylpentaméthylènediamine: le pH atteint alors la valeur de 9,27 ; dans cet exemple, on met donc en oeuvre un excès molaire de réactif aminé de 4 %.

2) Polycondensation en autoclave :

L'appareillage utilisé est constitué par un autoclave de 7,5 litres en acier inoxydable agité et équipé pour travailler jusqu'à 300 ° C et 2,2 MPa de pression. Il est muni :
- d'un système de chauffage à double enveloppe par fluide caloporteur,
- d'un agitateur de type cadre,
- d'un système permettant la mise sous pression d'azote,
- d'un circuit permettant de condenser et de recueillir les produits volatils,
- et d'un dispositif de mise sous une pression inférieure à la pression atmosphérique.

On introduit dans l'autoclave 6 kg de la solution aqueuse de sel préparée ci-avant. Après 3 purges à l'azote par mise sous pression de $4.10^5$ Pa puis décompression, on effectue en 20 minutes la concentration de la solution aqueuse de sel de 60 % en poids à 70,6 % en poids, par évaporation à la pression atmosphérique d'une partie de l'eau présente dans le milieu ; la température atteint alors 108,5 ° C.

Après on effectue successivement les étapes suivantes :

. Etape 1 :

On élève la température de la solution aqueuse à 70,6 % en poids de sel à T1 = 174 ° C en 50 minutes en maintenant la pression autogène. On atteint alors 0,7 MPa de pression (P). On distille ensuite sous pression constante de 0,7 ± 0,02 MPa en 1 heure 40 minutes l'eau présente dans la masse réactionnelle de manière à atteindre une température de masse égale à T2 = 224 ° C ;

. Etape 2 :

On décomprime jusqu'à pression atmosphérique en 1 heure et on élève dans le même temps la température de la masse à la valeur T3 = 275 ° C tout en continuant à assurer une distillation régulière d'eau ;

- Etape 3 :

On établit ensuite progressivement en 30 minutes une pression réduite de $750.10^2$ Pa tout en élevant dans le même temps la température de la masse à 280 °C, et on termine la polycondensation en continuant à agiter la masse à 280 °C sous $750.10^2$ Pa pendant 30 autres minutes.

L'agitation est arrêtée, puis on établit dans l'autoclave une pression d'azote et on soutire le polymère. Ce dernier extrudé de l'autoclave sous forme de jonc est refroidi par passage dans un bain d'eau froide, puis il est granulé et séché.

Le polymère obtenu est transparent et homogène. Il présente les caractéristiques suivantes :

- GT $NH_2$ = 70 méq/kg,
- GT COOH = 48 méq/kg,
- GT MPP = 18 méq/kg,
- IV = 111 ml/g.

Le bilan en matière de basicité est le suivant :

- basicité engagée : 26,2936 équivalents amino,
- basicité perdue dans les distillats : 0,8151 équivalents amino (dont 0,2209 équivalents amino sous forme de MPP),
- d'où une perte en basicité totale de 3,1 %.

EXEMPLE COMPARATIF A :

Dans cet exemple comparatif, on montre (toutes les autres conditions opératoires étant celles décrites ci-avant à l'exemple 1) que, lorsque la température T1 de début de distillation est supérieure à 190 °C et la pression autogène constante P est supérieure à 1,2 MPa, le polymère qui est synthétisé est obtenu alors avec une perte en basicité totale bien supérieure au seuil des 4 %.

On opère donc exactement comme indiqué ci-avant à l'exemple 1 avec seulement les variantes suivantes opérées au niveau de la conduite de l'étape 1.

La température T1 de début de distillation est égale à 217,2 °C, la durée de chauffage étant alors de 1 heure 25 minutes et on atteint 1,8 MPa de pression autogène P. On distille ensuite sous pression constante de 1,8 ± 0,02 MPa en 1 heure 40 minutes l'eau présente dans la masse réactionnelle et la température T2 atteinte au bout de ce temps est égale à 231,2 °C.

Le polymère amorphe obtenu présente les caractéristiques suivantes :

- GT $NH_2$ = 26 méq/kg,
- GT COOH = 205 méq/kg,
- GT MPP = 68 méq/kg,
- IV = 59,5 ml/g.

Le bilan en matière de basicité est le suivant :

- basicité engagée : 26,2936 équivalents amino,
- basicité perdue dans les distillats : 1,3410 équivalents amino (dont 0,5653 équivalents amino sous forme de MPP),
- d'où une perte en basicité totale de 5,1 %.

EXEMPLE COMPARATIF B :

Dans cet exemple comparatif, on montre (toutes les autres conditions opératoires étant celles décrites ci-avant à l'exemple 1) que, lorsque la température T1 de début de distillation est inférieure à 160 °C et la pression autogène constante P est inférieure à 0,5 MPa, le polymère qui est synthétisé est obtenu alors là aussi avec une perte en basicité totale supérieure au seuil des 4 %.

On opère donc exactement comme indiqué ci-avant à l'exemple 1 avec seulement les variantes suivantes opérées au niveau de la conduite de l'étape 1.

La température T1 de début de distillation est égale à 142,1 °C, la durée de chauffage étant alors de 40 minutes et on atteint 0,34 ± 0,03 MPa de pression autogène P. On distille ensuite sous pression constante de 0,34 MPa en 3 heures 30 minutes l'eau présente dans la masse réactionnelle et la température T2 atteinte au bout de ce temps est égale à 224,5 °C.

Le polymère amorphe obtenu présente les caractéristiques suivantes :

- GT $NH_2$ = 20 méq/kg,

- GT COOH = 158 méq/kg,
- GT MPP = 10 méq/kg,
- IV = 79,7 ml/g.

Le bilan en matière de basicité est le suivant :
- basicité engagée : 26,2936 équivalents amino,
- basicité perdue dans les distillats : 1,2016 équivalents amino (dont 0,2209 équivalents amino sous forme de MPP),
- d'où une perte en basicité totale de 4,57 %.

EXEMPLE 2 :

Dans cet exemple on décrit la préparation d'un polyamide semi-cristallin à partir d'acide téréphtalique et de méthyl-2 pentaméthylènediamine-1,5 avec une perte en basicité totale de 2,6 %.

1) Préparation du sel acide téréphtalique / méthylpentaméthylènediamine en solution aqueuse :

On opère comme indiqué ci-avant à l'exemple 1 mais avec les nouvelles charges suivantes :
- 2295,7 g d'acide téréphtalique (13,8295 moles)
- 1604,22 g de méthyl-2 pentaméthylènediamine-1,5 (13,8295 moles),
- 2600 g d'eau distillée.

En fin de salification, on rajoute 64,17 g (0,5532 mole) de méthylpentaméthylènediamine : le pH atteint alors la valeur de 9,20 et cette quantité additionnelle de réactif aminé correspond à un excès molaire de 4 %. La concentration de la solution aqueuse en sel est de 60 % en poids.

2) Polycondensation en autoclave :

On procède selon le même mode opératoire que celui indiqué dans l'exemple 1 avec les variantes suivantes :

. Au niveau de l'étape 1 :

On élève la température de la solution aqueuse à 70,6 % en poids de sel à T1 = 184 °C en 1 heure en maintenant la pression autogène. On atteint alors 0,85 MPa de pression. On distille ensuite sous pression constante de 0,85 ± 0,02 MPa en 1 heure 40 minutes l'eau présente dans la masse réactionnelle de manière à atteindre une température de masse égale à T2 = 225 °C ;

. Au niveau de l'étape 2 :

La décompression est opérée en deux périodes :
- décompression jusqu'à 0,6 MPa en 1 heure 30 minutes et en élevant dans le même temps la température de la masse à 288 °C, puis
- décompression jusqu'à la pression atmosphérique en 45 minutes et en élevant dans le même temps la température de la masse à la valeur T3 = 300 °C ;

. Au niveau de l'étape 3 :

La mise sous pression réduite de $750.10^2$ Pa et l'agitation finale de la masse sous pression réduite sont réalisées avec une température de masse inchangée égale à 300 °C.

Le polymère obtenu présente les caractéristiques suivantes :
- GT $NH_2$ = 92 méq/kg,
- GT COOH = 55 méq/kg,
- GT MPP = 31 méq/kg,

- IV = 114 ml/g.

Le bilan en matière de basicité est le suivant :

- basicité engagée : 26,2934 équivalents amino,
- basicité perdue dans les distillats : 0,6836 équivalents amino,
- d'où perte en basicité totale de 2,6 %.

**Revendications**

1. - Procédé de préparation de (co)polyamides semi-aromatiques amorphes ou semi-cristallins selon lequel on polycondense des compositions de départ comprenant soit un réactif acide comprenant au moins un acide dicarboxylique aromatique ayant 8 à 18 atomes de carbone et un réactif aminé comprenant majoritairement une alkylpentamétylenèdiamine, soit leur(s) sel(s), en opérant dans un système clos de type autoclave, et en enchaînant les étapes suivantes :
- étape 1 : dans laquelle, l'autoclave étant fermé, on augmente progressivement la température de la composition de départ jusqu'à une certaine valeur T1 supérieure à 110° C ; puis, sous une pression constante P égale à la pression autogène de vapeur d'eau obtenue qui est supérieure à la pression atmosphérique, on élimine par distillation régulière l'eau présente dans la masse réactionnelle en élevant progressivement dans le même temps la température de la masse à une valeur T2 supérieure à la température T1 atteinte avant distillation ;
- étape 2 : dans laquelle on abaisse progressivement la pression de la valeur de la pression autogène jusqu'à la valeur de la pression atmosphérique et éventuellement on éleve dans le même temps la température de la masse à une valeur T3 supérieure d'une dizaine à plusieurs dizaines de degrés celsius à la température T2 atteinte avant décompression, en continuant à assurer pendant la durée de cette décompression une distillation régulière d'eau ;
- étape 3 : dans laquelle on achève la polycondensation en agitant la masse réactionnelle un certain temps, en opérant sous la pression atmosphérique et éventuellement (ou) sous une pression inférieure avec une température de masse égale ou supérieure à la température T2 ou T3 obtenue en fin d'étape 2, pendant une durée suffisante permettant d'obtenir un polyamide ayant les caractéristiques moléculaires et de viscosité souhaitées ;

ledit procédé étant caractérisé par les points suivants :

. les compositions de départ d'une part contiennent en outre de manière obligatoire de l'eau en quantité suffisante pour permettre de conduire la distillation de l'étape 1 dans les conditions particulières de températures (T1 et T2) et de pression (P) indiquées dans le point qui suit, et d'autre part contiennent en outre mais de manière facultative un catalyseur ;

. dans l'étape 1, après avoir fermé l'autoclave, on augmente progressivement la température de la composition de départ jusqu'à une valeur T1 se situant dans l'intervalle allant de 160° C à 190° C ; puis, sous une pression constante P égale à la pression autogène de vapeur d'eau obtenue qui se situe dans l'intervalle allant de 0,5 à 1,2 MPa, on élimine par distillation régulière l'eau présente dans la masse réactionnelle en élevant progressivement dans le même temps la température de la masse à une valeur T2 se situant dans l'intervalle allant de 210° C à 235° C.

2. - Procédé selon la revendication 1, caractérisé en ce que, pour la réalisation de l'étape 1, on engage des compositions de départ qui se présentent sous forme d'une dispersion aqueuse ou d'une solution aqueuse de sel(s) contenant éventuellement en outre un catalyseur, dans laquelle la quantité d'eau correspond à celle permettant de conduire la distillation de l'étape 1 dans les conditions particulières de températures (T1 et T2) et de pression (P) indiquées ci-avant dans la revendication 1.

3. - Procédé selon l'une quelconque des revendications 1 ou 2, caractérisé en ce que le catalyseur auquel on peut faire appel consiste soit en un composé (α), soit en un composé (β), (α) désignant un mono- ou polyacide oxygéné minéral ou un mono- ou polyacide oxygéné organique autre qu'un acide carboxylique, dont l'une au moins des fonctions acides possède une constante d'ionisation pka dans l'eau à 25° C égale ou inférieure à 4, (β) désignant un sel alcalin ou alcalino-terreux de cet acide.

4. - Procédé selon la revendication 3, caractérisé en ce que les proportions d'acide fort (α) ou de sel (β), exprimées en pourcentage en poids par rapport au polyamide final, sont comprises entre 0,01 et 1 %.

5. - Procédé selon l'une quelconque des revendications 1 à 4, caractérisé en ce que, pour la réalisation de l'étape 1, on engage à côté du réactif acide des quantités de réactif aminé qui sont supérieures à celles juste nécessaires pour avoir l'équivalence entre les groupements COOH et $NH_2$ dans les compositions de départ.

6. - Procédé selon la revendication 5, caractérisé en ce que l'excès de réactif aminé, exprimé par le

pourcentage molaire de réactif aminé en excès suivant la relation :

$$\frac{\text{nombre total de moles de réactif aminé - nombre de moles de réactif aminé nécessaire pour la stoechiométrie}}{\text{nombre de moles de réactif aminé nécessaire pour la stoechiométrie}} \times 100$$

se situe dans l'intervalle allant de 0,5 à 7 %.

7. - Procédé selon l'une quelconque des revendications 1 à 6, caractérisé en ce que, pour sa mise en oeuvre, on part de compositions préparées à partir :

- à titre de réactif acide : d'acide téréphtalique et/ou d'acide isophtalique,
- et à titre de réactif aminé : de méthyl-2 pentaméthylènediamine-1,5 prise seule ou en mélange avec au plus 15 % en mole d'éthyl-2 tétraméthylenèdiamine-1,4.

Office européen des brevets

# RAPPORT DE RECHERCHE EUROPEENNE

Numero de la demande

EP 90 42 0084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | CHEMICAL ABSTRACTS, vol. 71, no. 24, 15 décembre 1969, page 75, résumé no. 114079d, Columbus, Ohio, US; & JP-A-69 19 551 (TOYO RAYON CO. LTD) 23-08-1969<br>* Résumé * | 1,7 | C 08 G 69/28<br>C 08 G 69/26 |
| A | FR-A-2 368 507 (BAYER AG)<br>* Revendications 1-4 * | 1-6 | |
| A | EP-A-0 252 860 (RHONE-POULENC)<br>* Revendications * | 1-6 | |
| A,D | FR-A-2 325 673 (DYNAMIT NOBEL)<br>* Revendications 1,2 * | 1,7 | |
| | | | **DOMAINES TECHNIQUES RECHERCHES (Int. Cl.5)** |
| | | | C 08 G |

Le présent rapport a été établi pour toutes les revendications

| Lieu de la recherche | Date d'achèvement de la recherche | Examinateur |
|---|---|---|
| LA HAYE | 09-05-1990 | GLANDDIER A. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)